(19) Europäisches Patentamt
European Patent Office
Office européen des brevets

(11) **EP 3 145 007 B1**

(12) **FASCICULE DE BREVET EUROPEEN**

(45) Date de publication et mention
de la délivrance du brevet:
**24.10.2018 Bulletin 2018/43**

(51) Int Cl.:
*H01M 4/86* *(2006.01)*      *H01M 8/04298* *(2016.01)*
*H01M 8/04701* *(2016.01)*   *C25B 11/02* *(2006.01)*
*C25B 15/02* *(2006.01)*     *H01M 8/0432* *(2016.01)*
*H01M 8/1018* *(2016.01)*

(21) Numéro de dépôt: **16189560.2**

(22) Date de dépôt: **20.09.2016**

(54) **DÉTERMINATION D´UNE DISTRIBUTION SPATIALE DE L´ACTIVITÉ CATALYTIQUE D'UNE ÉLECTRODE DE CELLULE ÉLECTROCHIMIQUE**

BESTIMMUNG EINER RÄUMLICHEN VERTEILUNG DER KATALYTISCHEN AKTIVITÄT EINER ELEKTRODE EINER ELEKTROCHEMISCHEN ZELLE

DETERMINATION OF A SPATIAL DISTRIBUTION OF THE CATALYTIC ACTIVITY OF AN ELECTROCHEMICAL CELL ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2015 FR 1558898**

(43) Date de publication de la demande:
**22.03.2017 Bulletin 2017/12**

(73) Titulaire: **Commissariat à l'énergie atomique et aux énergies alternatives 75015 Paris (FR)**

(72) Inventeurs:
• **ROBIN, Christophe**
**38000 Grenoble (FR)**
• **VINCENT, Rémi**
**38000 Grenoble (FR)**
• **GERARD, Mathias**
**38100 Grenoble (FR)**
• **JABBOUR, Lara**
**38000 Grenoble (FR)**

(74) Mandataire: **GIE Innovation Competence Group 310, avenue Berthelot 69372 Lyon Cedex 08 (FR)**

(56) Documents cités:
JP-A- 2007 323 852       US-A- 4 567 117
US-A1- 2007 298 299      US-A1- 2010 297 526
US-A1- 2010 323 279

• MARR C ET AL: "Composition and performance modelling of catalyst layer in a proton exchange membrane fuel cell", JOURNAL OF POWER SOURCES, ELSEVIER SA, CH, vol. 77, no. 1, 1 janvier 1999 (1999-01-01), pages 17-27, XP004156276, ISSN: 0378-7753, DOI: 10.1016/S0378-7753(98)00161-X
• WILKINSON D P ET AL: "In-plane gradients in fuel cell structure and conditions for higher performance", JOURNAL OF POWER SOURCES, ELSEVIER SA, CH, vol. 113, no. 1, 1 janvier 2003 (2003-01-01), pages 101-108, XP004399049, ISSN: 0378-7753, DOI: 10.1016/S0378-7753(02)00486-X

**Description**

**DOMAINE TECHNIQUE**

Le domaine de l'invention est celui des réacteurs électrochimiques comportant un empilement de cellules électrochimiques, tels que les piles à combustible et les électrolyseurs, et plus précisément celui des procédés de détermination d'un paramètre représentatif de l'activité catalytique d'au moins une électrode de la cellule électrochimique ainsi que celui des procédés de réalisation d'une électrode de cellule électrochimique.

**ÉTAT DE LA TECHNIQUE ANTÉRIEURE**

Un réacteur électrochimique tel qu'une pile à combustible ou un électrolyseur comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène), par exemple contenu dans de l'air, est amené au contact de la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte éventuellement contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules sont habituellement séparées les unes des autres par des plaques bipolaires qui assurent l'interconnexion électrique des cellules. Les plaques comportent un circuit de distribution du carburant formé sur une face anodique et un circuit de distribution du comburant formé sur une face cathodique opposée à la face anodique. Chaque circuit de distribution prend souvent le forme d'un réseau de canaux agencés par exemple en parallèle ou en serpentin, adaptés à amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

Chaque électrode est habituellement formée d'une couche active et d'une couche de diffusion. La couche de diffusion est située entre la couche active et la plaque bipolaire correspondante. Elle est réalisée en un matériau poreux permettant la diffusion des espèces réactives gazeuses jusqu'à la couche active ainsi que la diffusion des produits issus de la réaction électrochimique. La couche active, située entre la membrane électrolytique et la couche de diffusion, est le lieu de la réaction électrochimique. Elle comporte généralement un conducteur électronique (par exemple du carbone), un conducteur protonique (l'électrolyte) et un catalyseur, par exemple des particules de platine. Elle peut être formée d'un mélange de poudre de carbone platinée, de particules de PTFE et d'électrolyte polymère (par exemple du Nafion), disposé sur un tissu de carbone.

La couche active se caractérise par une activité catalytique qui traduit la capacité du catalyseur à catalyser une réaction (ici la réduction de l'oxygène). Elle peut être exprimée en termes d'activité spécifique et d'activité massique du catalyseur, qui correspondent à la densité de courant échangée par la cellule en fonctionnement normalisé respectivement par la surface active de catalyseur et par la masse de catalyseur. L'activité catalytique dépend notamment de la surface active du catalyseur et de sa charge (également appelée taux de chargement ou teneur).

On cherche habituellement à préserver la durée de vie des cellules électrochimiques, par exemple en uniformisant la distribution spatiale de la densité de courant produit par la cellule en fonctionnement. En effet, les inhomogénéités spatiales de densité de courant entraînent des inhomogénéités spatiales de température de la cellule, qui peuvent conduire, d'une part à augmenter la cinétique des réactions de dégradations des différents éléments de la cellule et d'autre part à générer des contraintes mécaniques d'origine thermique susceptibles de fragiliser la tenue mécanique des éléments de la cellule.

Ainsi, le document FR2976732 décrit une cellule électrochimique réalisée de manière à obtenir un échauffement local homogène au sein de la cellule en fonctionnement. L'échauffement dépend de la densité de courant électrique en chaque point de la cellule qui est elle-même fonction de la pression partielle d'espèce réactive. En effet, considérant ici le côté cathodique de la cellule, la quantité d'oxygène contenu dans le gaz circulant dans le circuit de distribution diminue progressivement à mesure que l'oxygène est consommé par la cellule, ce qui entraîne une variation spatiale de la densité de courant électrique produit par la cellule, et donc une variation spatiale de l'échauffement de la cellule. Pour éviter cette inhomogénéité spatiale de l'échauffement de la cellule, la conductivité électrique entre la plaque bipolaire amenant l'oxygène et la cellule est ajustée localement de manière à compenser la diminution de la pression partielle d'oxygène.

Dans le document WO2007/032903, la durée de vie d'une cellule électrochimique est préservée par l'utilisation d'une couche active dont la répartition spatiale de l'activité catalytique permet d'obtenir une distribution spatiale uniforme de la densité de courant, qui, en retour, se traduit par une distribution spatiale uniforme de la température de la cellule en fonctionnement. En particulier, ce document décrit une répartition spatiale d'activité catalytique qui varie entre l'entrée et la sortie des circuits de distribution des espèces réactives.

Le document US2010/323279 porte sur la simulation d'une pile à combustible pour estimer la puissance générée, en prenant en compte les propriétés physiques de la couche active. Le document US2007/298299 porte sur l'homogénéisation de la température pour améliorer la durée de vie de la pile en modifiant la distribution spatiale de la charge catalytique. Le document US2010/297526 porte sur l'homogénéisation de l'activité catalytique pour obtenir une densité locale de courant homogène.

## EXPOSÉ DE L'INVENTION

L'invention a pour objectif de remédier au moins en partie aux inconvénients de l'art antérieur, et plus particulièrement de proposer un procédé de détermination de la distribution spatiale d'un paramètre représentatif de l'activité catalytique d'une électrode de cellule électrochimique permettant notamment d'homogénéiser la température locale de la cellule électrochimique en fonctionnement et ainsi de préserver la durée de vie de cette dernière.

L'invention propose à cet effet un procédé d'optimisation selon la revendication indépendante 1. De manière plus générale, il s'agit d'un procédé de détermination d'une distribution spatiale d'un paramètre d'intérêt représentatif d'une activité catalytique d'une couche active d'au moins une électrode d'une cellule électrochimique, ladite cellule comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche active comportant au moins un catalyseur, la couche active étant adaptée à générer une réaction électrochimique à partir de l'une des espèces réactives, ledit procédé comprenant les étapes suivantes :

i) fourniture d'une cellule électrochimique au sein de laquelle le paramètre d'intérêt est réparti selon une distribution spatiale initiale, pour laquelle la distribution spatiale d'une température au sein de la cellule électrochimique en fonctionnement présente au moins une valeur locale supérieure ou égale à une valeur locale maximale prédéterminée ;

ii) définition d'une distribution spatiale d'une température de consigne au sein de la cellule en fonctionnement, telle que les valeurs locales de température sont inférieures à des valeurs locales maximales prédéterminées ;

iii) mesure d'une distribution spatiale d'une première grandeur thermique représentative de l'évacuation de la chaleur au sein de ladite cellule électrochimique en fonctionnement ;

iv) estimation d'une distribution spatiale d'une seconde grandeur thermique représentative de la production locale de chaleur au sein de ladite cellule électrochimique en fonctionnement, en fonction de ladite distribution spatiale de la température de consigne et de ladite distribution spatiale mesurée de la première grandeur thermique, de sorte que la distribution spatiale de température de ladite cellule électrochimique en fonctionnement, dont la première grandeur thermique présente ladite distribution spatiale mesurée et la seconde grandeur thermique présente ladite distribution spatiale estimée, soit sensiblement égale à celle de la température de consigne ;

v) détermination d'une distribution spatiale du paramètre d'intérêt en fonction de la distribution spatiale estimée de la seconde grandeur thermique.

Dans le cadre de l'invention revendiquée, le paramètre d'intérêt est la charge en catalyseur de la couche active. De préférence, la distribution spatiale du paramètre d'intérêt est déterminée de sorte qu'elle présente une valeur moyenne sensiblement identique à une valeur moyenne de la distribution initiale.

On obtient ainsi une distribution spatiale du paramètre d'intérêt, dont la prise en compte dans la cellule électrochimique considérée, permet à celle-ci, en fonctionnement, de présenter une distribution spatiale de température correspondant sensiblement à celle de la température de consigne. On évite ainsi que la cellule électrochimique en fonctionnement présente alors des zones dans lesquelles la température serait localement supérieure à des valeurs locales maximales prédéterminées.

La fourniture de la cellule électrochimique peut comporter une phase de réalisation expérimentale ou de modélisation numérique d'une cellule électrochimique, une phase de mesure de la distribution spatiale de la température au sein de la cellule électrochimique en fonctionnement, puis une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées. Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

La définition de la température de consigne peut être effectuée de sorte que les valeurs locales de température sont inférieures aux valeurs locales maximales correspondantes. La température de consigne peut présenter des valeurs locales sensiblement constantes, voire un gradient local de température sensiblement constant. Elle peut présenter des valeurs locales non constantes au sein de la distribution spatiale, qui restent inférieures à ces valeurs maximales prédéterminées. Elle peut également présenter un gradient local non constant au sein de la distribution spatiale, qui reste inférieur à des valeurs maximales prédéterminées.

La mesure de la distribution spatiale de la première grandeur thermique peut être une mesure expérimentale effectuée sur la cellule électrochimique considérée préalablement fabriquée, ou une mesure numérique effectuée sur un modèle numérique de la cellule électrochimique considérée. La première grandeur thermique est dans le contexte de l'invention revendiquée le débit local de fluide caloporteur parcourant un circuit de refroidissement d'une plaque bipolaire. L'estimation de la distribution spatiale de la seconde grandeur thermique peut comporter :

- une phase de réalisation d'un maillage, par exemple bidimensionnel ou tridimensionnel, d'un circuit de refroidissement d'au moins une plaque bipolaire de la cellule électrochimique dans lequel est destiné à s'écouler un fluide caloporteur, et
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

Dans ce cas, le modèle numérique prend en compte la distribution spatiale de la température de consigne et la distribution spatiale préalablement mesurée de la première grandeur thermique. Le modèle numérique discret, dit électrochimique, peut être une relation exprimant un paramètre représentatif de la production locale de chaleur, et est, dans le contexte de l'invention revendiquée, le flux local de chaleur, en fonction de la température locale et d'un paramètre représentatif de l'évacuation locale de chaleur, dans le contexte de l'invention, le débit local du fluide caloporteur.

Ainsi, la cellule électrochimique, dont la distribution spatiale du paramètre d'intérêt a été obtenue par le procédé de détermination, présente en fonctionnement une distribution spatiale de température sensiblement égale à celle de la température de consigne. On évite ainsi la génération de nouveaux points chauds ou nouvelles inhomogénéités de température, non voulus, qui pourraient apparaître si la distribution spatiale du paramètre d'intérêt était déterminée par une approche essentiellement thermique, c'est-à-dire sur la base d'une comparaison de la température réelle qui présente des points chauds ou inhomogénéités, et de la température de consigne.

De préférence, les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement. Les faces externes des tôles sont orientées vers une électrode de cellule électrochimique. Les canaux de refroidissement communiquent fluidiquement entre eux dans le sens où, entre l'entrée et la sortie du circuit de refroidissement, ils forment un réseau fluidique bidimensionnel, c'est-à-dire non linéaire.

De préférence, l'étape de détermination de la distribution spatiale du paramètre d'intérêt est effectuée en fonction, également, d'une valeur prédéterminée d'un paramètre représentatif de la puissance électrique globale de la cellule électrochimique. Le paramètre peut être la puissance électrique globale, à savoir le produit de la tension et de la densité de courant mesurées aux bornes de la cellule, voire le rendement de celle-ci, par exemple la tension de la cellule pour une densité de courant donnée. Il est alors possible de gérer à la fois la température locale au sein de la cellule électrochimique, dans le but d'en optimiser la durée de vie, tout en maintenant une puissance électrique voulue.

De préférence, l'étape v) comporte :

- une sous-étape de calcul d'une distribution spatiale d'un coefficient correcteur à partir de la distribution spatiale de la seconde grandeur thermique ;
- une sous-étape dans laquelle on détermine la distribution spatiale du paramètre d'intérêt par corrélation de la distribution spatiale initiale du paramètre d'intérêt avec la distribution spatiale du coefficient correcteur.

De préférence, l'étape v) comporte :

- une sous-étape dans laquelle on identifie au moins une zone Zi de la cellule où la seconde grandeur thermique présente une valeur locale estimée supérieure à une valeur seuil prédéterminée ;
- une sous-étape dans laquelle on détermine la distribution spatiale du paramètre d'intérêt par modification de la distribution spatiale initiale dans la zone Zi identifiée, en fonction de la valeur locale estimée de la seconde grandeur thermique dans cette zone.

La première grandeur thermique est représentative de l'évacuation locale de la chaleur produite par la cellule en fonctionnement, et la seconde grandeur thermique est représentative de la production locale de chaleur par la cellule en fonctionnement.

Selon l'invention revendiquée, la première grandeur thermique est le débit local effectif mesuré d'un fluide caloporteur circulant dans un circuit de refroidissement d'une plaque bipolaire de la cellule, et la seconde grandeur thermique est le flux local de chaleur produite par la cellule en fonctionnement.

L'étape v) peut comporter :

- une première sous-étape dans laquelle on estime une distribution spatiale de la densité d'un signal électrique produit par la cellule en fonctionnement, à partir de ladite distribution spatiale estimée du flux de chaleur produite, et
- une deuxième sous-étape dans laquelle on détermine la distribution spatiale du paramètre d'intérêt à partir de ladite distribution spatiale de la densité du signal électrique.

L'invention porte également sur un procédé de réalisation d'une électrode de cellule électrochimique, comportant les étapes dans lesquelles :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche active adaptée à générer une réaction électrochimique à partir de l'une des espèces réactives, la couche active présentant un paramètre d'intérêt représentatif d'une activité catalytique répartie spatialement selon une distribution initiale ;
- on détermine, par le procédé de détermination selon l'une quelconque des caractéristiques précédentes, une distribution spatiale du paramètre représentatif de l'activité catalytique ;
- on réalise ladite électrode de sorte que le paramètre représentatif de l'activité catalytique de la couche active de celle-ci présente la distribution spatiale déterminée.

L'étape de réalisation de ladite électrode peut comporter le dépôt, dans au moins une zone de la couche active préalablement identifiée à partir de ladite distribution spatiale déterminée du paramètre représentatif de l'activité catalytique, d'une encre catalytique présentant une charge catalytique inférieure à une charge catalytique moyenne hors de ladite zone.

L'encre catalytique peut être déposée par sérigraphie au moyen d'un écran de sérigraphie comportant au moins une ouverture obturée destinée à recouvrir ladite zone de la couche active.

L'invention porte également sur une électrode de cellule électrochimique comportant une couche active adaptée à générer une réaction électrochimique au sein de la cellule, caractérisée en ce qu'elle présente un paramètre représentatif d'une activité catalytique de la couche active, de préférence une charge catalytique, qui présente, dans au moins une zone de la couche active, une valeur locale inférieure à une valeur moyenne hors de ladite zone.

L'invention porte également sur un procédé de réalisation d'une cellule électrochimique, le procédé comportant les étapes suivantes :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, au moins une électrode comportant une couche active adaptée à générer une réaction électrochimique à partir de l'une des espèces réactives, la couche active présentant un paramètre d'intérêt représentatif d'une activité catalytique répartie spatialement selon une distribution initiale ;
- on détermine, par le procédé de détermination selon l'une quelconque des caractéristiques précédentes, une distribution spatiale du paramètre d'intérêt ;
- on réalise la cellule électrochimique sur la base de la cellule électrochimique de référence dans laquelle le paramètre d'intérêt présente la distribution spatiale déterminée.

Par sur la base de, on entend que la cellule électrochimique réalisée présente les mêmes propriétés électrochimiques que celles de la cellule de référence, hormis le paramètre d'intérêt qui est réparti selon la distribution spatiale déterminée. La cellule électrochimique réalisée peut être la cellule de référence dans laquelle la distribution spatiale initiale du paramètre d'intérêt a été modifiée pour être sensiblement égale à la distribution spatiale déterminée.

L'invention porte également sur un support d'enregistrement, comportant des instructions pour la mise en oeuvre du procédé d'optimisation selon l'une quelconque des caractéristiques précédentes, ces instructions étant aptes à être exécutées par un processeur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

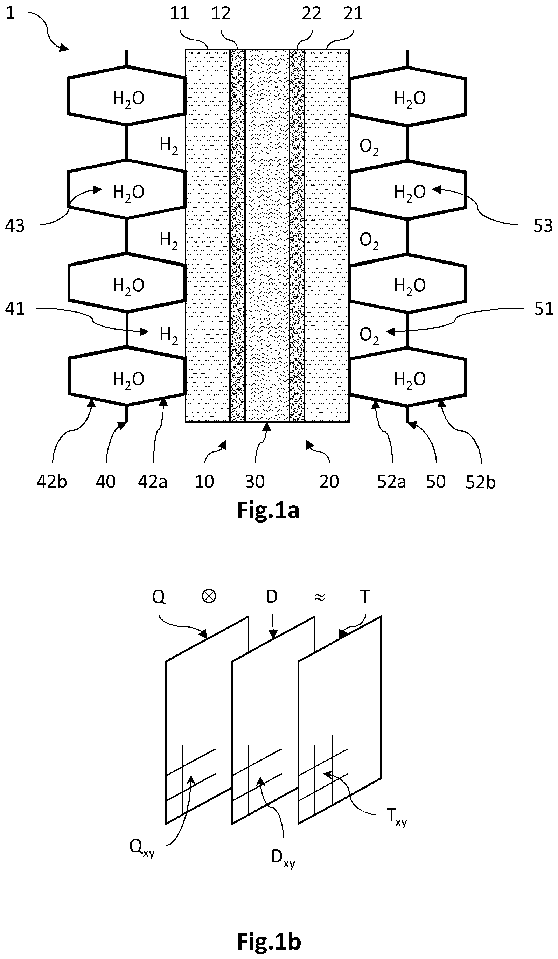

la figure la est une représentation schématique en coupe d'un exemple de cellule électrochimique, et la figure 1b est une représentation schématique illustrant la relation de corrélation entre la distribution spatiale de la production de chaleur et la distribution spatiale d'évacuation de chaleur dont résulte la distribution spatiale de température de la cellule électrochimique en fonctionnement ;
la figure 2 est un organigramme d'un procédé de détermination de la distribution spatiale de la charge catalytique d'une cellule électrochimique selon un premier mode de réalisation ;
la figure 3 est un organigramme d'un procédé de détermination de la distribution spatiale de la charge catalytique d'une cellule électrochimique selon un deuxième mode de réalisation ;
la figure 4 est un exemple de maillage du circuit de refroidissement où chaque maille comporte un terme de production locale de chaleur $Q_{i,j}^{e}$, un terme d'évacuation locale de chaleur $D_{i,j}^{r}$, et une température locale $T_{i,j}^{c}$ ;
la figure 5 est un exemple de relation entre la densité de puissance d'une pile à combustible en fonction de la charge catalytique des cellules électrochimiques ;
la figure 6a est un exemple de distribution spatiale de la température effective d'une cellule électrochimique de référence en fonctionnement pour laquelle la charge catalytique des couches actives des électrodes est spatialement uniforme, et la figure 6b est un exemple de distribution spatiale de la température effective de la cellule électrochimique pour laquelle la charge catalytique des couches actives présente une distribution spatiale déterminée selon le procédé du premier mode de réalisation ;
les figures 7a à 7c illustrent trois étapes du dépôt d'une encre catalytique sur la surface d'une couche active de cellule électrochimique au moyen d'un écran de sérigraphie.

## EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

On décrira différents modes de réalisation et variante en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

La figure la illustre de manière partielle et schématique un exemple de cellule électrochimique 1 appartenant à un empilement de cellules d'une pile à combustible de type PEM. La cellule 1 comporte une anode 10 et une cathode 20 séparées l'une de l'autre par un électrolyte comprenant ici une membrane polymère 30, les électrodes 10, 20 étant disposées entre deux plaques bipolaires 40, 50 adaptées à amener des espèces réactives aux électrodes et à évacuer la chaleur produite lors de la réaction électrochimique.

Les plaques bipolaires comportent un circuit de distribution d'hydrogène 41 situé sur une face anodique et un circuit de distribution d'oxygène 51 situé sur une face cathodique. Elles sont ici formées de deux tôles métalliques 42a, 42b ; 52a, 52b, assemblées l'une à l'autre par des zones ou points de soudure, et sont embouties de manière à former les circuits de distribution. L'agencement des bossages permet de réaliser également un circuit de refroidissement 43, 53 à l'intérieur des plaques assurant l'écoulement d'un fluide caloporteur sans que celui-ci ne vienne au contact des électrodes. D'autres technologies de plaque bipolaire peuvent être utilisées, par exemple les plaques réalisées en matériau composite chargé par exemple de graphite, dont les bossages sont réalisés par moulage. Chaque électrode 10, 20 comporte une couche de diffusion 11, 21 (GDL, pour *Gas Diffusion Loyer,* en anglais) disposée au contact de l'une des plaques bipolaires 40, 50 et une couche active 12, 22 située entre la membrane 30 et la couche de diffusion 11, 21. Les couches de diffusion 11, 21 sont réalisées en matériau poreux autorisant la diffusion des espèces réactives à partir du circuit de distribution des plaques bipolaires jusqu'aux couches actives, ainsi que la diffusion des produits issus de la réaction électrochimique jusqu'au même circuit de distribution. Les couches actives 12, 22 sont le lieu des réactions électrochimiques. Elles comportent des matériaux adaptés pour permettre les réactions d'oxydation et de réduction aux interfaces respectives de l'anode et la cathode avec la membrane. Plus précisément, elles comportent chacune un ionomère assurant la conductivité protonique, par exemple du Nafion, un catalyseur pour générer la réaction électrochimique, par exemple du platine, et un support électriquement conducteur, par exemple une matrice carbonée.

Comme mentionné précédemment, l'activité catalytique de la couche active dépend notamment de la surface active du catalyseur, c'est-à-dire de la surface du catalyseur susceptible d'être en contact avec l'espèce réactive, exprimée en centimètre carré ou parfois en centimètre carré par unité de masse de catalyseur, ainsi que de la charge en catalyseur (ou taux de chargement ou teneur), exprimée en gramme par unité de surface de la cellule.

La figure 1b représente schématiquement la distribution spatiale de température T de la cellule électrochimique comme résultant d'une relation de corrélation entre la distribution spatiale d'un terme source de production de chaleur, autrement dit d'une grandeur représentative de la production de chaleur par la cellule, tel que le flux de chaleur produite Q, et la distribution spatiale d'une grandeur représentative de l'évacuation de la chaleur produite, par exemple le débit massique D du fluide caloporteur dans le circuit de refroidissement.

Ainsi, contrairement à l'enseignement du document relatif à l'art antérieur cité précédemment, homogénéiser la distribution de production de chaleur Q et donc celle de l'échauffement de la cellule ne peut suffire à obtenir l'homogénéisation de la distribution de température T effective de la cellule. En effet, il importe de tenir compte à la fois de la présence éventuelle d'inhomogénéités locales dans le terme Q de production de chaleur ainsi que de la présence éventuelle d'inhomogénéités locales dans le terme D d'évacuation de chaleur.

La production locale de chaleur, ou plus précisément le flux local de chaleur produite Q, est directement proportionnelle à la production locale d'énergie électrique, ou plus précisément à la densité locale de courant I, comme l'exprime la relation entre les distributions spatiales respectives :

$$Q_{x,y} = I_{x,y} \left( \Delta H / 2F - U_{x,y} \right) \qquad\qquad (2)$$

où $\Delta H$ est l'enthalpie de la réaction électrochimique, F la constante de Faraday, et $U_{x,y}$ la distribution spatiale de la tension locale de la cellule, l'enthalpie et la tension pouvant être considérées comme quasiment homogènes en tout point de la cellule. Ainsi, la production de chaleur est impactée par toute inhomogénéité qui provient de paramètres fluidiques (dimensionnement des circuits de distribution des espèces réactives...), électrochimiques (propriétés locales des électrodes et de la membrane...), mais également électriques (résistances électriques des différents éléments de la cellule, par exemple résistivités des matériaux et résistances de contact entre les éléments de la cellule...), qui tous influent sur la distribution de densité de courant.

L'évacuation de chaleur par l'écoulement du fluide caloporteur peut également présenter des inhomogénéités locales qui proviennent notamment de pertes de charge singulières dans le circuit de refroidissement. Ces pertes de charge sont issues du dimensionnement du circuit de refroidissement lors de la réalisation des plaques bipolaires, et peuvent se traduire par la formation de zones à fort débit ou à faible débit au sein du circuit de refroidissement.

Dans le cadre de l'invention, on cherche à adapter la distribution spatiale d'un paramètre d'intérêt influençant la production d'énergie électrique, et donc d'énergie thermique, pour que la distribution spatiale de la température effective de la cellule en fonctionnement corresponde à celle d'une température de consigne, en tenant compte de la distribution spatiale de l'évacuation effective de chaleur que présente la cellule électrochimique.

Le paramètre influençant la production d'énergie électrique est ici un paramètre représentatif de l'activité catalytique de la couche active d'au moins une électrode de la cellule électrochimique. La valeur de ce paramètre d'intérêt influe localement sur la densité de courant $I_{x,y}$ dans la mesure où elle détermine la quantité d'électrons recombinés ou de protons générés respectivement à la cathode et à l'anode lors des réactions électrochimiques de réduction et d'oxydation. Le paramètre d'intérêt est ici la charge Wc du catalyseur, ou charge catalytique. Il peut également s'agir de tout paramètre équivalent, tel que la surface active du catalyseur. On comprend ici que, plus la charge locale $Wc_{x,y}$ en catalyseur est faible, plus faible sera la densité locale $I_{x,y}$ de courant produit par la cellule et donc le flux local $Q_{x,y}$ de chaleur produite.

Par température de la cellule, on entend la température locale, c'est-à-dire la distribution spatiale de température de l'un ou l'autre des éléments de la cellule, par exemple de l'une des plaques bipolaires voire de l'une des électrodes. La température de la cellule peut ainsi correspondre à la distribution spatiale de température du fluide caloporteur dans le circuit de refroidissement. La température effective de la cellule est la distribution spatiale de température lors du fonctionnement de la cellule au point de polarisation définie par la tension de la cellule $U_{tot}$ et la densité totale de courant $I_{tot}$, c'est-à-dire la densité locale de courant $I_{x,y}$ intégrée sur toute la surface de la cellule.

Par paramètre représentatif de l'évacuation de chaleur, on entend un paramètre dont la valeur traduit la capacité de la cellule à évacuer localement la chaleur produite. Il peut s'agir en particulier du débit local, massique ou volumique, du fluide caloporteur circulant dans le circuit de refroidissement.

Par distribution spatiale d'un paramètre, on entend la valeur locale de ce paramètre en tout point de la cellule, ou plus précisément, en tout point (x,y) d'un plan parallèle à la cellule, au niveau de la zone dite active correspondant à l'étendue surfacique des couches actives des électrodes.

Ainsi, la cellule électrochimique dont la charge en catalyseur serait répartie spatialement selon la distribution ainsi déterminée présenterait une température effective, ou température lors du fonctionnement de la cellule, sensiblement identique à la température de consigne. Cette température de consigne présente avantageusement une distribution spatiale sensiblement homogène, en scalaire ou en gradient. Par homogène en scalaire, on entend que la valeur locale de la température est sensiblement constante. Par homogène en gradient, on entend que le gradient local de température est sensiblement constant. Les valeurs locales de température peuvent cependant être non constantes tout en restant inférieures à des valeurs locales maximales prédéterminées. La cellule ne présente alors pas de zones de sur-température, ou points chauds, qui d'une part peuvent augmenter la cinétique des réactions de dégradation des éléments de la cellule et d'autre part peuvent générer des contraintes mécaniques susceptibles de dégrader la tenue mécanique des éléments de la cellule. La durée de vie de la cellule électrochimique est alors préservée. Par point chaud, on entend par exemple une zone de la cellule qui prend un pic de température ou un pic de gradient de température. Plus précisément, un point chaud peut être une zone où l'écart entre la température locale et la température d'entrée du circuit de refroidissement est supérieur au produit d'un coefficient et de l'écart de température entre l'entrée et la sortie du circuit de refroidissement, le coefficient pouvant être de l'ordre de 1.2 à 3 voire davantage, et est de préférence de l'ordre de 1.5. A titre d'exemple, pour une température de 77°C à l'entrée du circuit de refroidissement et de 80°C à la sortie du circuit, et pour un coefficient égal à 1.5, un point chaud est une zone de la cellule où la température locale excède 81.5°C.

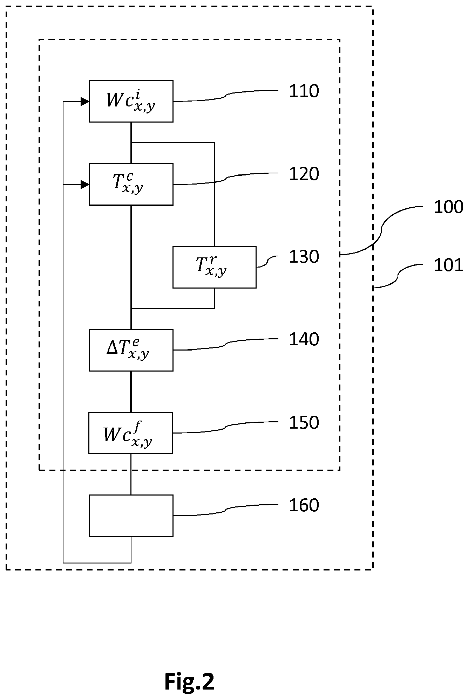

La figure 2 est un organigramme d'un procédé de détermination de la distribution spatiale du paramètre d'intérêt représentatif de l'activité catalytique d'une électrode, selon un premier mode de réalisation qui ne fait pas partie de l'invention revendiquée. Dans cet exemple, le paramètre d'intérêt est la charge $Wc$ en catalyseur d'une couche active d'une électrode de la cellule, par exemple la couche active cathodique, dont la valeur $Wc_{x,y}$ influe directement sur la densité locale de courant électrique $I_{x,y}$ localement produit lors de la réaction électrochimique et donc sur le flux local de chaleur produite $Q_{x,y}$.

D'une manière générale, selon ce premier mode de réalisation, on détermine une distribution spatiale optimisée $Wc_{x,y}^{f}$ de la charge $Wc$ en catalyseur à partir de l'estimation de la distribution spatiale $\Delta T_{x,y}^{e}$ d'un écart $\Delta T^{e}$ entre une température effective $T^{r}$ de la cellule en fonctionnement dans laquelle la charge catalytique est répartie spatialement selon une distribution initiale donnée, et une température de consigne $T^{c}$ prédéterminée. On est alors en mesure de modifier localement la charge catalytique $Wc$ de la couche active pour qu'elle présente la distribution optimisée $Wc_{x,y}^{f}$, de manière à ce que la température effective $T^{r}$ de la cellule modifiée soit sensiblement égale à la température de consigne $T^{c}$.

Lors d'une première étape 110, on définit une cellule électrochimique de référence au sein de laquelle la charge catalytique $Wc$ de la couche active cathodique est répartie spatialement selon une distribution initiale $Wc_{x,y}^{i}$. La cellule présente une structure identique ou similaire à celle décrite en référence à la figure 1. La distribution spatiale initiale $Wc_{x,y}^{i}$ de la charge catalytique $Wc$ peut être sensiblement homogène, c'est-à-dire ici qu'elle présente une valeur sensiblement constante en tout point de la zone active.

Lors d'une étape 120, on définit une distribution spatiale $T_{x,y}^{c}$ d'une température de consigne $T^{c}$ de la cellule de référence lorsque celle-ci est en fonctionnement et produit une densité totale de courant $I_{tot}$ pour une tension $U_{tot}$ donnée. Au premier ordre, la température de consigne $T^{c}$ de la cellule peut correspondre à une température du fluide caloporteur au sein du circuit de refroidissement, la distribution de cette température dépendant alors notamment des valeurs en entrée $T_{e}^{c}$ et en sortie $T^{c}$ du circuit de refroidissement. A titre illustratif, la température d'entrée peut être fixée préalablement, par exemple à 75°C, et la température de sortie peut être estimée à partir de la puissance thermique $P_{th}$ à évacuer, celle-ci correspondant à la puissance électrique $P_{e} = I_{tot}.U_{tot}$ délivrée lors du fonctionnement de la cellule. La puissance thermique $P_{th}$ est estimée à partir de l'intégration sur la zone active du flux local de chaleur produite $Q_{x,y}$ obtenu à partir de la relation (2). L'estimation de la température de sortie $T_{s}^{c}$ est ensuite obtenue par corrélation de la puissance thermique $P_{th}$ estimée précédemment avec le débit total moyen $<D_{tot}>$ du liquide caloporteur dans le circuit de refroidissement, moyennant la capacité thermique $c_{p}$ du fluide caloporteur. On peut ensuite définir la distribution spatiale $T_{x,y}^{c}$ de la température de consigne $T^{c}$ à partir des valeurs de température du fluide caloporteur en entrée $T_{e}^{c}$ et en sortie $T_s^c$ du circuit de refroidissement, la distribution $T_{x,y}^c$ étant avantageusement homogène en gradient, c'est-à-dire que le gradient local de température de consigne est sensiblement constant.

Lors d'une étape 130, on obtient une distribution spatiale $T_{x,y}^r$ d'une première grandeur thermique représentative de la température de la cellule en fonctionnement. La première grandeur thermique est ici la température effective $T^r$ de la cellule électrochimique lorsqu'elle est en fonctionnement dans les mêmes conditions opératoires que celles considérées dans l'étape 120. Cette distribution $T_{x,y}^r$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 110, par exemple au moyen d'une carte S++ commercialisée par la société « S++ Simulation Services » comportant une plaque invasive insérée entre deux plaques bipolaires et adaptée à mesurer une distribution spatiale de température. La distribution $T_{x,y}^r$ de température effective peut également être obtenue par simulation numérique à partir d'un modèle électrochimique de cellule, par exemple celui décrit dans la publication d'Inoue et al, Numerical analysis of relative humidity distribution in polymer electrolyte fuel cell stock including cooling water, J. Power Sources 162 (2006) 81-93.

La distribution $T_{x,y}^r$ de la température effective $T^r$ obtenue par mesure expérimentale ou numérique prend ainsi en compte les inhomogénéités locales du flux de chaleur produite qui dépend de la densité locale de courant, ainsi que celles de l'évacuation de chaleur qui dépend notamment du débit local du fluide caloporteur dans le circuit de refroidissement.

Lors d'une étape 140, on estime la distribution spatiale d'une seconde grandeur thermique, ici une grandeur $\Delta T^e$ représentative d'un écart local entre la température effective $T^r$ et la température de consigne $T^c$. L'estimation de cette grandeur d'écart local $\Delta T^e$ est calculée à partir de la distribution spatiale $T_{x,y}^c$ de la température de consigne $T^c$ définie lors de l'étape 120 et de la distribution spatiale $T_{x,y}^r$ de la température effective $T^r$ mesurée lors de l'étape 130. Il peut s'agir de la différence entre la valeur locale de la température effective et celle de la température de consigne, ou d'un rapport entre ces valeurs, ou autre. On considère ici la différence termes à termes entre les distributions de la température effective et de la température de consigne : $\Delta T_{x,y}^e = T_{x,y}^r - T_{x,y}^c$. Lors d'une étape 150, on détermine ensuite la distribution spatiale $Wc_{x,y}^f$ de la charge catalytique Wc en fonction de la distribution spatiale $\Delta T_{x,y}^e$ de l'écart local $\Delta T^e$.

Selon une première variante, on calcule tout d'abord un coefficient correcteur dont la distribution spatiale est proportionnelle termes à termes à celle $\Delta T_{x,y}^e$ de l'écart local $\Delta T^e$. A titre d'exemple, le coefficient correcteur varie continûment entre une valeur minimale et une valeur maximale à mesure que l'écart local varie respectivement entre une valeur sensiblement nulle à une valeur maximale. La valeur minimale du coefficient correcteur peut être ici sensiblement comprise entre 0 et 0.75, voire entre 0 et 0.5, et par exemple être sensiblement égale à 0, 0.1, 0.2, 0.3, et la valeur maximale peut être sensiblement égale à l'unité. On peut ensuite déterminer la distribution spatiale $Wc_{x,y}^f$ de la charge catalytique Wc par corrélation, par exemple une multiplication termes à termes, de la distribution spatiale initiale $Wc_{x,y}^i$ de la charge catalytique Wc avec la distribution spatiale du coefficient correcteur. Ainsi, dans les zones de la cellule où l'écart $\Delta T^e$ entre la température effective et la température de consigne présente une valeur maximale, c'est-à-dire dans les zones dites de points chauds, la valeur locale initiale $Wc_{x,y}^i$ de la charge catalytique Wc est multipliée par la valeur locale du coefficient correcteur, par exemple égale à 0.25, voire moins. Ainsi, la charge catalytique Wc présente une nouvelle valeur locale diminuée par rapport à la valeur locale initiale, qui réduit la densité locale de courant et donc le flux de chaleur produite.

Selon une deuxième variante, on identifie tout d'abord au moins une zone $Z_i$ de la cellule dans laquelle l'écart $\Delta T^e$ présente une valeur supérieure à une valeur seuil prédéterminée, la valeur seuil étant par exemple représentative d'un point chaud. On détermine ensuite la distribution spatiale $Wc_{x,y}^f$ de la charge catalytique Wc par modification de la distribution spatiale initiale $Wc_{x,y}^i$ dans la zone $Z_i$ identifiée en fonction de la valeur locale de l'écart $\Delta T^e$ dans cette zone. A titre d'exemple, la distribution spatiale initiale $Wc_{x,y}^i$ peut être localement modifiée à partir d'un coefficient correcteur dont la valeur est proportionnelle à celle de l'écart $\Delta T^e$ dans cette zone. Comme dans la première variante, le coefficient correcteur varie continûment entre une valeur minimale et une valeur maximale, par exemple entre 0 et 1.

On obtient ainsi une distribution spatiale $Wc_{x,y}^f$ de la charge catalytique Wc de la couche active. On est alors en mesure de modifier la distribution initiale Wc de la charge catalytique Wc de la couche active cathodique de la cellule de référence pour qu'elle présente la nouvelle distribution déterminée lors de l'étape 150. La cellule ainsi optimisée présente alors, en fonctionnement, une température effective dont la distribution spatiale est sensiblement égale à celle de la température de consigne. Dans la mesure où la distribution de la température de consigne est avantageusement homogène, la cellule en fonctionnement présente une température effective dont la distribution est également sensiblement homogène, permettant ainsi de préserver la durée de vie de la cellule.

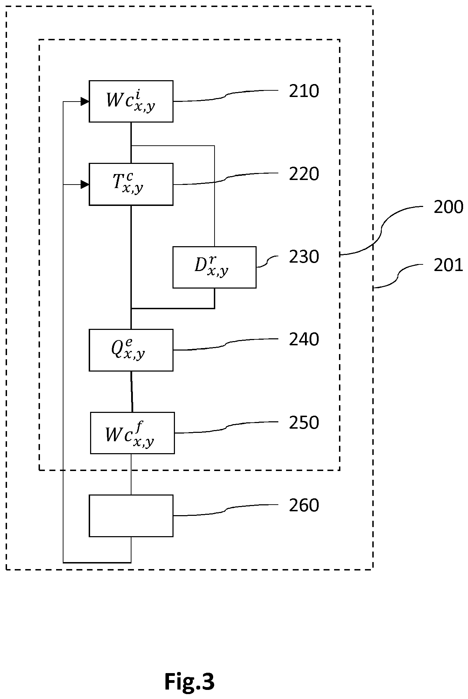

La figure 3 est un organigramme d'un procédé de détermination de la distribution spatiale d'un paramètre d'intérêt représentatif de l'activité catalytique d'une couche active d'au moins une électrode d'une cellule électrochimique, selon un deuxième mode de réalisation. Dans cet exemple, le paramètre d'intérêt est la charge catalytique Wc de la couche active, ici de la cathode, dont la valeur influe directement sur la densité de courant électrique localement échangée lors de la réaction électrochimique.

D'une manière générale, selon ce deuxième mode de réalisation, on détermine la distribution spatiale $Wc_{x,y}^f$ de la charge catalytique Wc à partir de l'estimation de la distribution spatiale de la production de chaleur nécessaire pour obtenir la distribution spatiale d'une température de consigne, en tenant compte de la distribution spatiale d'une grandeur thermique représentative de l'évacuation effective de chaleur dans la cellule. On est alors en mesure de modifier la distribution initiale de la charge catalytique Wc de la couche active pour qu'elle présente une distribution spatiale optimisée, de manière à ce que la température effective soit alors sensiblement égale à la température de consigne. La cellule électrochimique, dont le paramètre d'intérêt est spatialement réparti selon la distribution optimisée, présente en fonctionnement une température sensiblement égale à la température de consigne. Il n'y a pas de formations de nouveaux points chauds ou nouvelles inhomogénéités de température non voulus.

Cette approche, dite électrochimique, et non plus essentiellement thermique, est particulièrement avantageuse lorsqu'au moins une plaque bipolaire de la cellule électrochimique, voire les deux plaques bipolaires, sont formées de tôles accolées l'une à l'autre et présentant des bossages qui définissent un circuit de refroidissement bidimensionnel. Les bossages de chaque tôle, au niveau des faces, dites externes, des tôles, c'est-à-dire des faces orientées vers une électrode, définissent un circuit de distribution pour les espèces réactives. Au niveau des faces internes, c'est-à-dire des faces opposées aux faces externes, les bossages forment un circuit de refroidissement dans lequel est destiné à circuler un fluide caloporteur. Le circuit de refroidissement est dit linéaire lorsque les canaux de refroidissement ne communiquent pas entre eux, c'est-à-dire que le fluide caloporteur, entre l'entrée et la sortie du circuit de refroidissement, ne peut sensiblement pas passer d'un canal de refroidissement à un autre. Le circuit de refroidissement est dit bidimensionnel lorsque les canaux de refroidissement communiquent entre eux, de manière à former un réseau fluidique bidimensionnel et non pas linéaire. C'est le cas notamment lorsque les canaux de distribution d'une tôle ne sont pas parallèles à ceux de l'autre tôle.

Lors d'une première étape 210, on définit, ou fournit, une cellule électrochimique de référence au sein de laquelle la charge catalytique Wc de la couche active cathodique est répartie spatialement selon une distribution initiale $Wc_{x,y}^i$. La distribution spatiale initiale $Wc_{x,y}^i$ de la charge catalytique Wc peut être sensiblement homogène en scalaire, de sorte que la valeur locale est sensiblement constante en tout point de la zone active. La cellule présente une structure identique ou similaire à celle décrite en référence à la figure 1 et cette étape est similaire ou identique à l'étape 110 décrite précédemment. La cellule électrochimique considérée présente alors, en fonctionnement, une distribution spatiale de température dont au moins une valeur locale est supérieure ou égale à une valeur locale maximale prédéterminée. Cette dernière peut être constante ou différente en fonction du point considéré de la cellule électrochimique. Cette étape peut comporter :

- une phase de réalisation expérimentale ou de modélisation numérique d'une cellule électrochimique,
- une phase de mesure de la distribution spatiale de la température au sein de la cellule électrochimique en fonctionnement, puis
- une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées.

Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

Lors d'une étape 220, on définit une distribution spatiale $T_{x,y}^c$ d'une température de consigne $T^c$ de la cellule de référence lorsque celle-ci est en fonctionnement et produit une densité totale de courant $I_{tot}$ pour une tension $U_{tot}$ donnée. Cette étape est similaire ou identique à l'étape 120 décrite précédemment. Les valeurs locales de la distribution spatiale de la température de consigne sont inférieures à des valeurs locales maximales correspondantes.

De manière facultative, il est avantageux de préciser la distribution spatiale $T_{x,y}^c$ de la température de consigne $T^c$ en fonction de la distribution spatiale de la concentration en espèce réactive au niveau de la zone active, entre l'entrée et la sortie du circuit de distribution correspondant. En effet, la consommation d'espèce réactive au sein de la zone active de la cellule conduit à une diminution progressive de la concentration d'espèce réactive le long du circuit de distribution. Cette diminution progressive se traduit par une diminution de la densité locale de courant produit par la cellule et donc de la production locale de chaleur, ce qui peut conduire à la formation d'inhomogénéités de la température de la cellule. Pour compenser cette diminution progressive de la production de chaleur, il est avantageux de définir une température de consigne qui tienne compte de la diminution de la concentration d'espèce réactive, de sorte que la température effective de la cellule en fonctionnement correspond à la température de consigne, celle-ci présentant avantageusement une distribution spatiale homogène. Pour cela, la distribution spatiale $\tilde{T}_{x,y}^c$ de la température de consigne précisée $\tilde{T}^c$ peut s'écrire, par exemple :

$$\tilde{T}_{x,y}^c = T_{x,y}^c + K^i.[\ \max(c_{x,y}^i) - c_{x,y}^i\ ] \qquad (3)$$

où $c_{x,y}^i$ est la distribution spatiale de la concentration $c^i$ en espèce réactive $i$, par exemple en oxygène, et $K^i$ est une constante positive, par exemple proche de 1, qui peut ultérieurement être ajustée. La distribution spatiale $c_{x,y}^i$ de la concentration $c^i$ peut être estimée au premier ordre à partir du cheminement des canaux du circuit de distribution de l'espèce réactive considérée et en supposant une consommation homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de la concentration de l'espèce réactive. D'autres relations (3) peuvent convenir pour préciser la distribution spatiale de la température de consigne en tenant compte de l'évolution spatiale de la concentration en espèce réactive. On obtient ainsi une distribution spatiale $\tilde{T}_{x,y}^c$ de la température de consigne $\tilde{T}^c$ qui permet ainsi d'obtenir une distribution de la température effective de la cellule dont l'homogénéité est améliorée.

Par ailleurs, de manière facultative et éventuellement complémentaire de l'étape de précision de la température de consigne décrite précédemment, il est avantageux de préciser la distribution spatiale $T_{x,y}^c$ de la température de consigne $T^c$ en fonction de la distribution spatiale $\varphi_{x,y}$ de l'humidité relative $\varphi$ dans les circuits de distribution. L'humidité relative $\varphi$ est définie classiquement comme le rapport entre la pression partielle $P_{H2O}$ de la vapeur d'eau contenue localement dans le gaz circulant dans le circuit de distribution sur la pression de vapeur saturante $P_{sat}$. L'humidité relative $\varphi$ a un effet sur la cinétique des réactions électrochimiques. Aussi, pour compenser la variation locale de l'humidité relative, il est avantageux de définir une température de consigne qui compense cette variation locale, par exemple l'engorgement ou l'assèchement local des circuits de distribution, de sorte que la température effective de la cellule en fonctionnement présente une distribution spatiale homogène. Pour cela, la distribution spatiale $\tilde{T}_{x,y}'^c$ de la température de consigne précisée $\tilde{T}'^c$ peut s'écrire, par exemple :

$$\tilde{T}_{x,y}'^c = T_{x,y}^c + K^\varphi.[\ \varphi_{x,y} / \varphi_{in}\ ] \qquad (4)$$

où $\varphi_{x,y}$ est la distribution spatiale de l'humidité relative $\varphi$ dans le circuit de distribution, $\varphi_{in}$ est l'humidité relative en entrée du circuit de distribution, et $K^{\varphi}$ est une constante positive, par exemple proche de 1, qui peut ultérieurement être ajustée. La distribution $\varphi_{x,y}$ de l'humidité relative $\varphi$ d'eau totale peut être estimée au premier ordre à partir du cheminement des canaux du circuit de distribution considéré et en supposant une densité de courant homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de l'humidité relative. D'autres relations (4) peuvent convenir pour préciser la distribution spatiale de la température de consigne à partir de l'évolution spatiale de l'humidité relative. On obtient ainsi une distribution spatiale $\widetilde{T}^{c}_{x,y}$ de la température de consigne $\tilde{T}^{c}$ qui permet ainsi d'obtenir une distribution de la température effective de la cellule dont l'homogénéité est améliorée.

Lors d'une étape 230, on obtient une distribution spatiale $D^{r}_{x,y}$ d'une première grandeur thermique représentative de l'évacuation de la chaleur $D^{r}$ au sein de la cellule en fonctionnement. La première grandeur thermique est ici le débit massique $D^{r}$ de fluide caloporteur dans le circuit de refroidissement. Cette distribution $D^{r}_{x,y}$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 210, par exemple au moyen d'une technique de type PIV (*Particle Image Velocimetry*, en anglais) ou de toute autre technique adaptée, réalisée dans un circuit de refroidissement présentant les mêmes caractéristiques dimensionnelles que celui de la cellule de référence. La distribution $D^{r}_{x,y}$ de débit massique $D^{r}$ peut également être obtenue par simulation numérique à partir d'un logiciel de simulation d'écoulement tel que, par exemple, FLUENT ou COMSOL.

Lors d'une étape 240, on estime la distribution spatiale $Q^{e}_{x,y}$ d'une seconde grandeur thermique $Q^{e}$ à partir de ladite distribution spatiale $T^{c}_{x,y}$ de la température de consigne $T^{c}$ définie lors de l'étape 220 et de ladite distribution spatiale $D^{r}_{x,y}$ du débit de fluide caloporteur $D^{r}$ obtenue lors de l'étape 230. La seconde grandeur thermique est représentative de la production locale de chaleur et correspond ici au flux local de chaleur $Q^{e}$ qu'évacue le fluide caloporteur $D^{r}$ pour obtenir la température de consigne $T^{c}$.

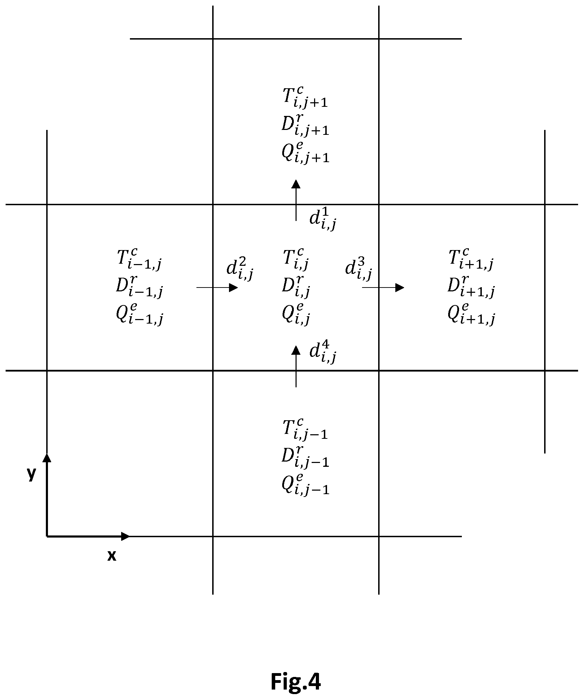

Pour cela, comme l'illustre la figure 4, on discrétise le circuit de refroidissement en un maillage bidimensionnel ou tridimensionnel, ici bidimensionnel, dont chaque maille est un volume élémentaire (i,j) traversé par le fluide caloporteur. Ainsi, chaque maille (i,j) du circuit de distribution présente deux grandeurs connues : la température locale $T^{c}_{i,j}$ de consigne et le débit local $D^{r}_{i,j}$ de fluide caloporteur ; et une grandeur à déterminer : le flux local de chaleur produite $Q^{e}_{i,j}$. On calcule ensuite les transferts thermiques et fluidiques entre la maille considérée et les mailles adjacentes en déterminant d'une part les différences de température, et d'autre part les débits du fluide caloporteur au niveau des quatre facettes de la maille considérée. Ce calcul peut être effectué par simulation numérique par ordinateur, sur ledit maillage. Cela revient à résoudre un modèle numérique discret exprimant la seconde grandeur thermique, à savoir ici le flux local de chaleur, en fonction de la température locale et de la première grandeur thermique, à savoir ici le débit local du fluide caloporteur. Le modèle numérique, dit électrochimique, peut être exprimé par la relation (7).

Les différences de température au niveau des quatre facettes de la maille (i,j) peuvent être calculées de la manière suivante :

$$\delta T^{1}_{i,j} = T^{c}_{i,j} - T^{c}_{i,j+1} \qquad (5\text{-}1)$$

$$\delta T^{2}_{i,j} = T^{c}_{i,j} - T^{c}_{i-1,j} \qquad (5\text{-}2)$$

$$\delta T^{3}_{i,j} = T^{c}_{i,j} - T^{c}_{i+1,j} \qquad (5\text{-}3)$$

$$\delta T_{i,j}^4 = T_{i,j}^c - T_{i,j-1}^c \qquad (5\text{-}4)$$

Les débits du fluide caloporteur au niveau des quatre facettes de la maille (i,j) peuvent être obtenus par projection du débit massique $D_{i,j}^r$ (ici une donnée vectorielle) sur les vecteurs $e_x$ et $e_y$ passant respectivement par les mailles (i-1,j), (i,j) et (i+l,j), et par les mailles (i,j-1), (i,j) et (i,j+l) :

$$d_{i,j}^1 = (D_{i,j}^r.e_y + D_{i,j+1}^r.e_y)/2 \qquad (6\text{-}1)$$

$$d_{i,j}^2 = (D_{i,j}^r.e_x + D_{i-1,j}^r.e_x)/2 \qquad (6\text{-}2)$$

$$d_{i,j}^3 = (D_{i,j}^r.e_x + D_{i+1,j}^r.e_x)/2 \qquad (6\text{-}3)$$

$$d_{i,j}^4 = (D_{i,j}^r.e_y + D_{i,j-1}^r.e_y)/2 \qquad (6\text{-}4)$$

Par convention, on considère que le débit local $d_{i,j}$ est positif lorsque le fluide entre dans la maille (i,j) et négatif lorsqu'il en sort.

On calcule enfin la distribution spatiale $Q_{x,y}^e$ du flux $Q^e$ de chaleur produit par la cellule à partir de la relation :

$$Q_{x,y}^e \approx Q_{i,j}^e = \sum_{k=1}^4 d_{i,j}^k.c_p.\delta T_{i,j}^k \qquad (7)$$

On obtient ainsi la distribution spatiale du flux de chaleur $Q^e$ que doit produire la cellule pour que la distribution de température effective corresponde à celle de la température de consigne, connaissant la distribution du débit massique effectif du fluide caloporteur dans le circuit de distribution.

Lors d'une étape 250, on détermine la distribution spatiale $Wc_{x,y}^f$ de la charge catalytique Wc en fonction de la distribution spatiale $Q_{x,y}^e$ du flux de chaleur produite $Q^e$. Pour cela, on peut estimer tout d'abord la distribution spatiale de la densité d'un signal électrique produit par la cellule en fonctionnement, par exemple une densité de courant $I^e$, à partir de la distribution spatiale $Q_{x,y}^e$ estimée du flux de chaleur produite $Q^e$. Dans la mesure où le flux de chaleur produite $Q^e$ est approximativement proportionnel à la densité de courant $I^e$, celle-ci peut être déterminée à partir de la relation :

$$I_{x,y}^e = Q_{x,y}^e.\frac{I_{tot}}{Q_{tot}} \qquad (8)$$

où $I_{tot}$ est la densité de courant totale délivrée par la cellule électrochimique en fonctionnement, et $Q_{tot}$ est le flux de chaleur produite totale obtenue par intégrale de la distribution spatiale $Q_{x,y}^e$ sur toute la surface active.

Ensuite, on détermine la nouvelle distribution spatiale $Wc_{x,y}^f$ de la charge catalytique Wc à partir de la densité locale du courant électrique $I_{x,y}^e$. Pour cela, une approche consiste à déterminer les valeurs minimale $Wc_{min}$ et maximale $Wc_{max}$ de la charge Wc de la couche active. Il peut s'agir de valeurs couramment admises dans le cadre des piles de type PEM. On calcule ensuite la distribution spatiale $Wc_{x,y}^f$ par exemple à partir de la relation :

$$Wc_{x,y}^f = \max\left(Wc_{max}, Wc_{min}\,\frac{I_{max}^e}{I_{x,y}^e}\right) \qquad (9)$$

où $I_{max}^e$ est la valeur maximale de la densité locale de courant $I_{x,y}^e$. La charge Wc locale varie ainsi linéairement entre les valeurs minimale $Wc_{min}$ et maximale $Wc_{max}$ en fonction de la valeur locale de la densité de courant $I^e$. Bien entendu, toute autre loi, par exemple polynomiale, exponentielle ou logarithmique, faisant varier la charge Wc locale de sorte que la valeur maximale $Wc_{max}$ corresponde à une densité locale de courant maximale et inversement, peut convenir. Les valeurs minimale $Wc_{min}$ et maximale $Wc_{max}$ peuvent être prédéterminées en fonction de la puissance électrique globale UI voulue de la cellule électrochimique, où U est la tension électrique et I la densité de courant électrique mesurées aux bornes de la cellule.

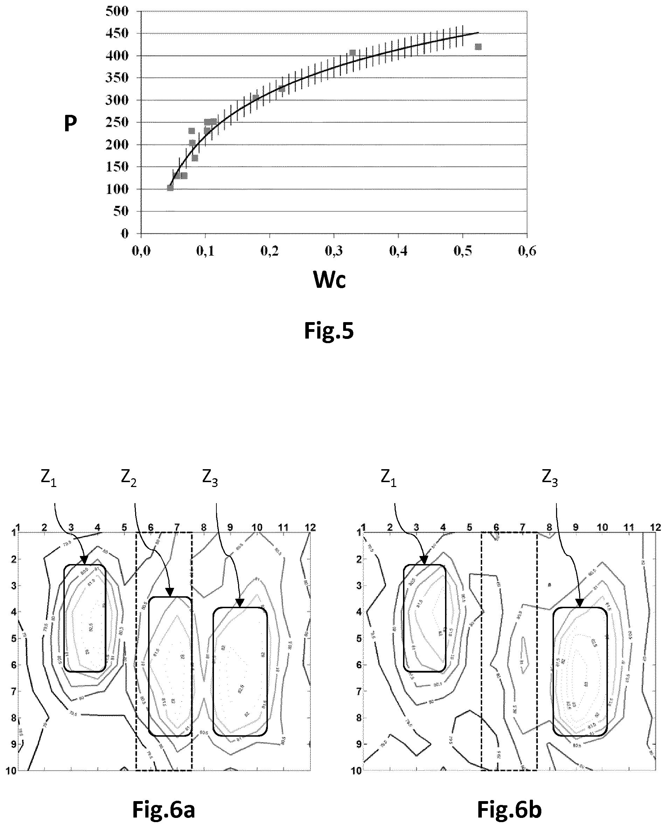

De manière alternative à la relation (9), on détermine la distribution spatiale $Wc_{x,y}^f$ à partir d'une courbe donnant la relation entre la densité de courant I et la charge Wc. La figure 5 est un exemple d'une telle relation, qui relie ici de manière équivalente la densité de puissance d'une pile à combustible en fonctionnement à la charge catalytique en platine des cellules électrochimique, pour un rendement de 50%. En fonction de la distribution spatiale $I_{x,y}^e$, on détermine la distribution spatiale $Wc_{x,y}^f$. On remarque ici que la charge catalytique peut varier d'une valeur minimale de l'ordre de 0,05mg/cm² à une valeur maximale de l'ordre de 0,4mg/cm² à 0,5mg/cm², ce qui entraîne une variation de la densité de courant et donc de puissance allant de 100mW/cm² à 400mW/cm².

On a ainsi déterminé la distribution spatiale $Wc_{x,y}^f$ de la charge Wc qui tienne compte de la distribution de production d'énergie électrique $I^e$ et donc thermique $Q^e$ qu'il faudrait pour que la température effective de la cellule en fonctionnement corresponde à la température de consigne $T^c$, en considérant l'évacuation effective $D^r$ de la chaleur par le circuit de refroidissement. Dans la mesure où la température de consigne est avantageusement homogène spatialement, une cellule dont au moins l'une des électrodes comporte une couche active dont la charge catalytique Wc est répartie suivant la distribution spatiale ainsi déterminé $Wc_{x,y}^f$ présente, lorsqu'elle est en fonctionnement au point de polarisation $U_{tot}$ et $I_{tot}$, une température effective dont la distribution spatiale est homogène.

La figure 6a illustre un exemple de distribution spatiale de température effective d'une cellule électrochimique en fonctionnement, dans le cas où les couches actives anodique et cathodique présentent une charge catalytique sensiblement uniforme. Trois zones de sur-température, ou zones de points chauds, sont présentes, référenciées $Z_1$ à $Z_3$. Les conditions opératoires dans ce cas sont une pression de l,5bar, une température de 80°C en sortie du circuit de refroidissement, une humidité relative en entrée de 50% à l'anode et à la cathode, une stoechiométrie de 1,8 pour l'air et de 1,5 pour l'hydrogène.

La figure 6b illustre la distribution spatiale de température effective de la même cellule électrochimique en fonctionnement, dans le cas où au moins une couche active présente une charge catalytique présentant la distribution spatiale modifiée selon le premier mode de réalisation du procédé (figure 2) uniquement dans une partie de la cellule indiquée par les traits pointillés. On peut remarquer que, dans cette partie où un point chaud $Z_2$ était présent, la distribution de température est sensiblement homogène et ne présente pas de zones de sur-température. Dans les autres parties de la cellule où la charge catalytique n'a pas été modifiée, les points chauds $Z_1$ et $Z_3$ restent présents.

Un procédé de réalisation d'une électrode de cellule électrochimique est maintenant décrit, ici la cathode de la cellule. On considère une cellule électrochimique identique ou similaire à la cellule de référence définie lors des étapes 110 et 210. Elle comporte deux électrodes séparées l'une de l'autre par un électrolyte et disposées entre deux plaques bipolaires adaptées à amener des espèces réactives aux électrodes et à évacuer de la chaleur produite par la cellule en fonctionnement. Les électrodes comportent chacune une couche de diffusion et une couche active. La cathode présente ici une couche active dont la charge catalytique Wc est répartie spatialement selon une distribution initiale $Wc_{x,y}^i$. On détermine, par le procédé décrit précédemment en référence aux figures 2 ou 3, une distribution spatiale $Wc_{x,y}^f$ de la charge catalytique de la couche active cathodique. On réalise ensuite, lors d'une étape 160 (figure 2) ou 260 (figure 3), la cathode de sorte que la charge catalytique Wc de la couche active présente la distribution spatiale $Wc_{x,y}^f$ déterminée.

Ainsi, on modifie localement la charge catalytique Wc de la couche active de manière à former des inhomogénéités dans la distribution spatiale $Wc_{x,y}$ en vue de compenser les inhomogénéités de la température effective de la cellule en fonctionnement vis-à-vis d'une température de consigne. A titre d'exemple, on diminue localement la charge Wc de la couche active dans des zones où la température effective de la cellule est susceptible d'être supérieure à la température de consigne. Ainsi, la densité locale de courant est diminuée, ce qui diminue en conséquence le flux local de chaleur produite. Ainsi, la température effective de la cellule correspond localement à la température de consigne.

Pour cela, on dépose sur un support de la couche active, par exemple carboné, une encre catalytique comportant, à titre illustratif, un catalyseur, par exemple 4g de $Pt_3Co$, un ionomère, par exemple 6,4g de Nafion™, de l'eau, par exemple à hauteur de 18,5g, et un solvant, par exemple 1,5g d'éthanol.

L'encre catalytique peut être déposée à la surface du support de la couche active de la cathode, dans au moins une zone $Z_i$ de sur-température identifiée, voire sur toute la surface de la couche active, par toutes les techniques de dépôts connues de l'homme du métier, par exemple par sérigraphie.

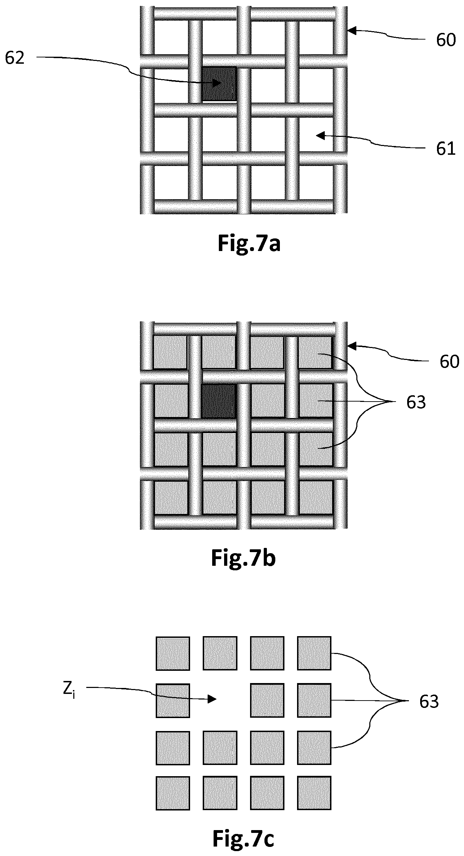

En référence aux figures 7a à 7c, dans le cas où un dépôt est réalisé par sérigraphie dans certaines zones de la couche active, un écran de sérigraphie 60 est réalisé qui forme un maillage d'ouvertures traversantes 61, par exemple de quelques centimètres carrés de surface. Certaines ouvertures 62 sont obturées pour empêcher le dépôt de l'encre catalytique dans les zones $Z_i$ identifiées (figure 7a). On dépose ensuite l'écran 60 sur le support de la couche active, puis on dépose l'encre catalytique 63 sur la couche active au travers de l'écran 60 (figure 7b). Après retrait de l'écran, la couche active comporte l'encre catalytique 63 sur sensiblement toute sa surface hormis les zones $Z_i$ (figure 7c). La quantité de catalyseur peut être ajustée dans les zones $Z_i$ en effectuant éventuellement un ou plusieurs dépôts successifs dans ces zones avec une encre catalytique présentant une quantité de catalyseur différente de celle utilisée pour les zones adjacentes aux zones $Z_i$.

Ainsi, la couche active comporte une charge catalytique dont la valeur varie localement. Dans au moins une zone $Z_i$, la valeur locale de la charge catalytique est inférieure à la valeur moyenne de la charge hors de cette zone $Z_i$.

A titre illustratif, les zones $Z_i$, dans lesquelles la charge catalytique Wc est modifiée selon la distribution spatiale $Wc_{x,y}^f$ déterminée par le procédé de détermination décrit en référence aux figures 2 ou 3, peuvent être de l'ordre de quelques centaines de microns carrés à quelques centimètres carrés, par exemple de $400\mu m^2$ qui est la taille typique d'une maille d'un écran de sérigraphie classiquement utilisé, à $110cm^2$ qui est ici la moitié de la surface totale d'une cellule de $220cm^2$. Bien entendu, ces données sont ici purement illustratives. Plus précisément, une telle zone $Z_i$ présente une surface allant de $0,5cm^2$ à $40cm^2$, où $0,5cm^2$ est ici la taille minimale typique d'une maille d'un dispositif de mesure permettant de mesurer les inhomogénéités de température, et où $40cm^2$ est une taille typique des points chauds mesurés. La surface des zones $Z_i$ peut ainsi être de l'ordre de $6cm^2$.

Il a été observé qu'une diminution de 100% de catalyseur sur une bande de $2\times16cm^2$ permet de diminuer la densité locale de courant de $0,3A/cm^2$, ce qui entraîne une baisse de la température effective locale de 2°C en moyenne. Ainsi, par extrapolation, on peut supposer qu'une diminution de $0,1mg/cm^2$ de platine sur au moins $1cm^2$ entraîne une baisse de la température effective dans cette zone de 0,5°C.

La charge catalytique peut être comprise entre 0 et $0,5mg/cm^2$ dans le cas du platine pour une cellule électrochimique de pile à combustible. La charge catalytique présente une valeur locale maximale hors des zones $Z_i$ et une valeur locale dans les zones $Z_i$ inférieure à la valeur nominale. Une valeur moyenne nominale de la charge est comprise entre les valeurs locales maximale et minimale, et correspond à la moyenne de la charge locale sur toute la surface de la couche active. La valeur moyenne nominale dépend notamment de la densité totale de puissance souhaitée. Elle peut ainsi être de l'ordre de $0,4mg/cm^2$ de platine. La teneur en ionomère, par exemple en Nafion, peut être comprise entre 2% et 30% de la charge catalytique, de préférence comprise entre 7% et 20%, par exemple de l'ordre de 15%.

Il peut être avantageux que la distribution spatiale $Wc_{x,y}^f$ déterminée de la charge Wc présente une valeur moyenne nominale sensiblement identique à celle de la distribution initiale $Wc_{x,y}^i$, de manière à ne pas modifier la densité totale de puissance de la cellule en fonctionnement. Ainsi, alors que, dans les zones $Z_i$ de points chauds, la distribution spatiale $Wc_{x,y}^f$ présente une valeur locale inférieure à celle de la distribution initiale $Wc_{x,y}^i$, on augmente la valeur locale $Wc_{x,y}^f$ hors des zones $Z_i$. A titre d'exemple, pour maintenir une valeur moyenne de $0,4mg/cm^2$ de platine sur l'ensemble de la couche active, une diminution de $0,1mg/cm^2$ sur une zone $Z_i$ de $6cm^2$ conduit à répartir 0,6mg sur le reste de la surface de la couche active, par exemple sur $214cm^2$ pour une cellule de $220cm^2$ de couche active.

Des modes de réalisation particuliers viennent d'être décrits. Différentes variantes et modifications apparaîtront à l'homme du métier.

**Revendications**

1. Procédé d'optimisation d'une distribution spatiale $(Wc^f_{x,y})$ de la charge en catalyseur (Wc) d'une couche active d'au moins une électrode d'une cellule électrochimique d'une pile à combustible, afin d'homogénéiser une température de la cellule électrochimique en fonctionnement,
   ladite cellule électrochimique comportant deux électrodes séparées l'une de l'autre par un électrolyte et disposées entre deux plaques bipolaires adaptées à amener des espèces réactives aux électrodes et à évacuer de la chaleur produite par la cellule électrochimique en fonctionnement, au moins une électrode comportant une couche active comportant au moins un catalyseur, la couche active étant adaptée à générer une réaction électrochimique à partir de l'une des espèces réactives, ledit procédé comprenant les étapes suivantes :

   i) réalisation expérimentale ou modélisation numérique (110 ; 210) d'une cellule électrochimique au sein de laquelle ladite charge en catalyseur (Wc) est répartie selon une distribution spatiale initiale $(Wc^i_{x,y})$, pour laquelle la distribution spatiale d'une température au sein de la cellule électrochimique en fonctionnement présente au moins une valeur locale supérieure ou égale à une valeur locale maximale prédéterminée ;

   ii) définition (120 ; 220) d'une distribution spatiale $(T^c_{x,y})$ d'une température de consigne (T$^c$) au sein de ladite cellule électrochimique en fonctionnement, telle que les valeurs locales de température sont inférieures à des valeurs locales maximales prédéterminées ;

   iii) mesure expérimentale ou numérique (130 ; 230) d'une distribution spatiale $(D^r_{x,y})$ du débit local effectif (D$^r$) d'un fluide caloporteur circulant dans un circuit de refroidissement d'une plaque bipolaire de ladite cellule électrochimique en fonctionnement ;

   iv) estimation (140 ; 240) d'une distribution spatiale $(Q^e_{x,y})$ du flux local de chaleur (Q$^e$) produit par ladite cellule électrochimique en fonctionnement, en fonction de ladite distribution spatiale $(T^c_{x,y})$ de la température de consigne (T$^c$) et de ladite distribution spatiale mesurée $(D^r_{x,y})$ du débit local effectif (D$^r$), de sorte que la distribution spatiale de température de ladite cellule électrochimique en fonctionnement, dont le débit local effectif (D$^r$) présente ladite distribution spatiale mesurée $(D^r_{x,y})$ et le flux local de chaleur (Q$^e$) présente ladite distribution spatiale estimée $(Q^e_{x,y})$, soit sensiblement égale à celle $(T^c_{x,y})$ de la température de consigne (T$^c$) ;

   v) détermination (150 ; 250) de la distribution spatiale optimale $(Wc^f_{x,y})$ de la charge en catalyseur (Wc), en fonction de la distribution spatiale estimée $(Q^e_{x,y})$ de la seconde grandeur thermique (Q$^e$).

2. Procédé d'optimisation selon la revendication 1, dans lequel la distribution spatiale $(Wc^f_{x,y})$ de la charge en catalyseur (Wc) est déterminée de sorte qu'elle présente une valeur moyenne sensiblement identique à une valeur moyenne de la distribution initiale $(Wc^i_{x,y})$.

3. Procédé d'optimisation selon l'une quelconque des revendications 1 à 2, dans lequel les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement.

4. Procédé d'optimisation selon l'une quelconque des revendications 1 à 3, dans lequel l'étape de détermination de la distribution spatiale de la charge en catalyseur (Wc) est en outre effectuée en fonction d'une valeur prédéterminée d'un paramètre représentatif d'une puissance électrique globale de la cellule électrochimique.

**5.** Procédé d'optimisation selon l'une quelconque des revendications 1 à 4, dans lequel l'étape d'estimation d'une distribution spatiale du flux local de chaleur ($Q^e$) comporte :

- une phase de réalisation d'un maillage d'un circuit de refroidissement d'au moins une plaque bipolaire de la cellule électrochimique dans lequel est destiné à s'écouler un fluide caloporteur ;
- une phase de simulation numérique par ordinateur du flux local de chaleur, sur ledit maillage, par résolution d'un modèle numérique discret exprimant le flux local de chaleur ($Q^e$) en fonction de la température locale et du débit local effectif ($D^r$).

**6.** Procédé d'optimisation selon l'une quelconque des revendications 1 à 5, dans lequel l'étape v) comporte :

a) une première sous-étape dans laquelle on estime une distribution spatiale de la densité d'un signal électrique ($I^e$) produit par la cellule électrochimique en fonctionnement, à partir de ladite distribution spatiale estimée du flux de chaleur produite ($Q^e$), et
b) une deuxième sous-étape dans laquelle on détermine la distribution spatiale du paramètre d'intérêt (Wc) à partir de ladite distribution spatiale de la densité du signal électrique ($I^e$).

**7.** Procédé de réalisation d'une électrode de cellule électrochimique d'une pile à combustible, comportant les étapes dans lesquelles :

i) on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule électrochimique en fonctionnement, au moins une électrode comportant une couche active adaptée à générer une réaction électrochimique à partir de l'une des espèces réactives, la couche active présentant une charge en catalyseur (Wc) répartie spatialement selon une distribution initiale $\left(Wc_{x,y}^i\right)$ ;
ii) on détermine, par le procédé (100 ; 200) selon l'une quelconque des revendications précédentes, une distribution spatiale optimale $\left(Wc_{x,y}^f\right)$ de la charge en catalyseur (Wc) ;
iii) on réalise (160 ; 260) ladite électrode de sorte que la charge en catalyseur (Wc) de la couche active présente la distribution spatiale $\left(Wc_{x,y}^f\right)$ optimale déterminée.

**8.** Procédé de réalisation selon la revendication 7, dans lequel l'étape de réalisation de ladite électrode comporte le dépôt, dans au moins une zone ($Z_i$) de la couche active préalablement identifiée à partir de ladite distribution spatiale optimale déterminée $\left(Wf_{x,y}^f\right)$ de la charge en catalyseur (Wc), d'une encre catalytique présentant une charge catalytique inférieure à une charge catalytique moyenne hors de ladite zone ($Z_i$).

**9.** Procédé de réalisation selon la revendication 8, dans lequel l'encre catalytique est déposée par sérigraphie au moyen d'un écran de sérigraphie comportant au moins une ouverture obturée destinée à recouvrir ladite zone ($Z_i$) de la couche active.

**10.** Procédé de réalisation d'une cellule électrochimique d'une pile à combustible comportant les étapes suivantes :

- on considère une cellule électrochimique de référence comportant deux électrodes séparées l'une de l'autre par un électrolyte et disposées entre deux plaques bipolaires adaptées à amener des espèces réactives aux électrodes et à évacuer de la chaleur produite par la cellule électrochimique en fonctionnement, au moins une électrode comportant une couche active adaptée à générer une réaction électrochimique à partir de l'une des espèces réactives, la couche active présentant une charge en catalyseur (Wc) répartie spatialement selon une distribution initiale $\left(Wc_{x,y}^i\right)$ ;
- on détermine, par le procédé de détermination selon l'une quelconque des revendications 1 à 6, une distribution spatiale optimale $\left(Wc_{x,y}^f\right)$ de la charge en catalyseur (Wc) ;
- on réalise la cellule électrochimique sur la base de la cellule électrochimique de référence dans laquelle la charge en catalyseur (Wc) présente la distribution spatiale optimale $\left(Wc_{x,y}^{f}\right)$ déterminée.

11. Support d'enregistrement d'informations, comportant des instructions pour la mise en oeuvre du procédé d'optimisation selon l'une quelconque des revendications 1 à 6, ces instructions étant aptes à être exécutées par un processeur.

**Patentansprüche**

1. Verfahren zur Optimierung einer räumlichen Verteilung $\left(Wc_{x,y}^{f}\right)$ der Katalysatorbeladung (Wc) einer aktiven Schicht wenigstens einer Elektrode einer elektrochemischen Zelle einer Brennstoffbatterie, um eine Temperatur der elektrochemischen Zelle im Betrieb zu homogenisieren,
wobei die elektrochemische Zelle zwei Elektroden aufweist, die durch einen Elektrolyten voneinander getrennt sind und zwischen zwei bipolaren Platten angeordnet sind, die dafür ausgelegt sind, reaktive Spezies den Elektroden zurückzuführen und Wärme abzuführen, die von der elektrochemischen Zelle im Betrieb erzeugt wird, wobei wenigstens eine Elektrode eine aktive Schicht aufweist, die wenigstens einen Katalysator aufweist, wobei die aktive Schicht dafür ausgelegt ist, ausgehend von einer der reaktiven Spezies eine elektrochemische Reaktion zu erzeugen, wobei das Verfahren die folgenden Schritte umfasst:

i) experimentelle Realisierung oder numerische Modellierung (110; 210) einer elektrochemischen Zelle, innerhalb welcher die Katalysatorbeladung (Wc) gemäß einer räumlichen Anfangsverteilung $\left(Wc_{x,y}^{i}\right)$ verteilt ist, für welche die räumliche Verteilung einer Temperatur innerhalb der elektrochemischen Zelle im Betrieb wenigstens einen lokalen Wert aufweist, der größer oder gleich einem vorbestimmten maximalen lokalen Wert ist;

ii) Definition (120; 220) einer solchen räumlichen Verteilung $\left(T_{x,y}^{c}\right)$ einer Solltemperatur ($T^{c}$) innerhalb der elektrochemischen Zelle im Betrieb, dass die lokalen Temperaturwerte niedriger als vorbestimmte maximale lokale Werte sind;

iii) experimentelle oder numerische Messung (130; 230) einer räumlichen Verteilung $\left(D_{x,y}^{r}\right)$ der effektiven lokalen Durchflussmenge ($D^{r}$) eines Wärmeträgers, der in einem Kühlkreislauf einer bipolaren Platte der elektrochemischen Zelle im Betrieb zirkuliert;

iv) Schätzung (140, 240) einer räumlichen Verteilung $\left(Q_{x,y}^{e}\right)$ des lokalen Wärmeflusses ($Q^{e}$), der von der elektrochemischen Zelle im Betrieb erzeugt wird, in Abhängigkeit von der räumlichen Verteilung $\left(T_{x,y}^{c}\right)$ der Solltemperatur ($T^{c}$) und der gemessenen räumlichen Verteilung $\left(D_{x,y}^{r}\right)$ der effektiven lokalen Durchflussmenge ($D^{r}$), derart, dass die räumliche Temperaturverteilung der elektrochemischen Zelle im Betrieb, deren effektive lokale Durchflussmenge ($D^{r}$) die gemessene räumliche Verteilung $\left(D_{x,y}^{r}\right)$ aufweist und deren lokaler Wärmefluss ($Q^{e}$) die geschätzte räumliche Verteilung $\left(Q_{x,y}^{e}\right)$ aufweist, im Wesentlichen gleich derjenigen $\left(T_{x,y}^{c}\right)$ der Solltemperatur ($T^{c}$) ist;

v) Bestimmung (150; 250) der optimalen räumlichen Verteilung $\left(Wc_{x,y}^{f}\right)$ der Katalysatorbeladung (Wc) in Abhängigkeit von der geschätzten räumlichen Verteilung $\left(Q_{x,y}^{e}\right)$ der zweiten thermischen Größe ($Q^{e}$).

2. Verfahren zur Optimierung nach Anspruch 1, wobei die räumliche Verteilung $\left(Wc_{x,y}^{f}\right)$ der Katalysatorbeladung (Wc) derart bestimmt wird, dass sie einen Mittelwert aufweist, der im Wesentlichen mit einem Mittelwert der Anfangsverteilung $\left(Wc_{x,y}^{i}\right)$ identisch ist.

3. Verfahren zur Optimierung nach einem der Ansprüche 1 bis 2, wobei die bipolaren Platten von zwei nebeneinander angeordneten Blechen gebildet werden, wobei jedes Blech Erhebungen aufweist, die an einer sogenannten äußeren Seite einen Kreislauf zur Verteilung einer reaktiven Spezies bilden, wobei die Erhebungen der Bleche zusammen an sogenannten inneren Seiten, die den äußeren Seiten gegenüberliegen, einen Kühlkreislauf bilden, der Kühlkanäle aufweist, die zwischen einem Eingang und einem Ausgang des Kühlkreislaufs miteinander in Fluidverbindung stehen.

4. Verfahren zur Optimierung nach einem der Ansprüche 1 bis 3, wobei der Schritt der Bestimmung der räumlichen Verteilung der Katalysatorbeladung (Wc) außerdem in Abhängigkeit von einem vorbestimmten Wert eines Parameters durchgeführt wird, der für eine elektrische Gesamtleistung der elektrochemischen Zelle repräsentativ ist.

5. Verfahren zur Optimierung nach einem der Ansprüche 1 bis 4, wobei der Schritt der Schätzung einer räumlichen Verteilung des lokalen Wärmeflusses ($Q^e$) umfasst:

- eine Phase der Herstellung eines Maschennetzes eines Kühlkreislaufs wenigstens einer bipolaren Platte der elektrochemischen Zelle, in welchem ein Wärmeträger fließen soll;
- eine Phase der numerischen Computersimulation des lokalen Wärmeflusses auf dem Maschennetz durch Lösung eines diskreten numerischen Modells, welches den lokalen Wärmefluss ($Q^e$) in Abhängigkeit von der lokalen Temperatur und von der effektiven lokalen Durchflussmenge ($D^r$) ausdrückt.

6. Verfahren zur Optimierung nach einem der Ansprüche 1 bis 5, wobei Schritt v) umfasst:

a) einen ersten Teilschritt, in welchem eine räumliche Verteilung der Dichte eines elektrischen Signals ($I^e$), das von der elektrochemischen Zelle im Betrieb erzeugt wird, ausgehend von der geschätzten räumlichen Verteilung des erzeugten Wärmeflusses ($Q^e$) geschätzt wird, und
b) einen zweiten Teilschritt, in welchem die räumliche Verteilung des interessierenden Parameters (Wc) ausgehend von der räumlichen Verteilung der Dichte des elektrischen Signals (Ie) bestimmt wird.

7. Verfahren zur Herstellung einer Elektrode einer elektrochemischen Zelle einer Brennstoffbatterie, welches die Schritte umfasst:

i) Betrachten einer elektrochemischen Referenzzelle, welche zwei Elektroden aufweist, die durch einen Elektrolyten voneinander getrennt sind und zwischen zwei bipolaren Platten angeordnet sind, die dafür ausgelegt sind, reaktive Spezies den Elektroden zurückzuführen und Wärme abzuführen, die von der elektrochemischen Zelle im Betrieb erzeugt wird, wobei wenigstens eine Elektrode eine aktive Schicht aufweist, die dafür ausgelegt ist, ausgehend von einer der reaktiven Spezies eine elektrochemische Reaktion zu erzeugen, wobei die aktive Schicht eine Katalysatorbeladung (Wc) aufweist, die gemäß einer Anfangsverteilung $\left( Wc_{x,y}^{i} \right)$ räumlich verteilt ist;
ii) Bestimmen, durch das Verfahren (100; 200) nach einem der vorhergehenden Ansprüche, einer optimalen räumlichen Verteilung $\left( Wc_{x,y}^{f} \right)$ der Katalysatorbeladung (Wc);
iii) Herstellen (160; 260) der Elektrode, derart, dass die Katalysatorbeladung (Wc) der aktiven Schicht die bestimmte optimale räumliche Verteilung $\left( Wc_{x,y}^{f} \right)$ aufweist.

8. Verfahren zur Herstellung nach Anspruch 7, wobei der Schritt der Herstellung der Elektrode das Aufbringen, in wenigstens einem Bereich (Zi) der aktiven Schicht, der zuvor aus der bestimmten optimalen räumlichen Verteilung $\left( Wf_{x,y}^{f} \right)$ der Katalysatorbeladung (Wc) identifiziert wurde, einer katalytischen Tinte umfasst, die eine katalytische Beladung aufweist, die kleiner als eine mittlere katalytische Beladung außerhalb des Bereichs (Zi) ist.

9. Verfahren zur Herstellung nach Anspruch 8, wobei die katalytische Tinte durch Siebdruck mittels einer Siebdruckplatte aufgebracht wird, die wenigstens eine verschlossene Öffnung aufweist, die dazu bestimmt ist, den Bereich (Zi) der aktiven Schicht zu bedecken.

10. Verfahren zur Herstellung einer elektrochemischen Zelle einer Brennstoffbatterie, welches die folgenden Schritte umfasst:

- Betrachten einer elektrochemischen Referenzzelle, welche zwei Elektroden aufweist, die durch einen Elektrolyten voneinander getrennt sind und zwischen zwei bipolaren Platten angeordnet sind, die dafür ausgelegt sind, reaktive Spezies den Elektroden zurückzuführen und Wärme abzuführen, die von der elektrochemischen Zelle im Betrieb erzeugt wird, wobei wenigstens eine Elektrode eine aktive Schicht aufweist, die dafür ausgelegt ist, ausgehend von einer der reaktiven Spezies eine elektrochemische Reaktion zu erzeugen, wobei die aktive Schicht eine Katalysatorbeladung (Wc) aufweist, die gemäß einer Anfangsverteilung $\left( Wc^{i}_{x,y} \right)$ räumlich verteilt ist;

- Bestimmen, durch das Verfahren zur Bestimmung nach einem der Ansprüche 1 bis 6, einer optimalen räumlichen Verteilung $\left( Wc^{f}_{x,y} \right)$ der Katalysatorbeladung (Wc);

- Herstellen der elektrochemischen Zelle auf der Basis der elektrochemischen Referenzzelle, in welcher die Katalysatorbeladung (Wc) die bestimmte optimale räumliche Verteilung $\left( Wc^{f}_{x,y} \right)$ aufweist.

**11.** Informationsaufzeichnungsmedium, welches Anweisungen zur Durchführung des Verfahrens zur Optimierung nach einem der Ansprüche 1 bis 6 umfasst, wobei diese Anweisungen von einem Prozessor ausführbar sind.

**Claims**

**1.** Process for the optimization of a spatial distribution ($Wc^{f}_{x,y}$) of the catalyst charge (Wc) of an active layer of at least one electrode of an electrochemical cell of a fuel cell, in order to render uniform a temperature of the electrochemical cell in operation,
the said electrochemical cell comprising two electrodes separated from one another by an electrolyte and positioned between two bipolar plates suitable for bringing reactive entities to the electrodes and for discharging heat produced by the electrochemical cell in operation, at least one electrode comprising an active layer comprising at least one catalyst, the active layer being suitable for generating an electrochemical reaction from one of the reactive entities, the said process comprising the following stages:

i) experimental production or numerical modelling (110; 210) of an electrochemical cell within which the said catalyst charge (Wc) is distributed according to an initial spatial distribution ($Wc^{i}_{x,y}$), for which the spatial distribution of a temperature within the electrochemical cell in operation exhibits at least one local value greater than or equal to a predetermined maximum local value;
ii) definition (120; 220) of a spatial distribution ($T^{c}_{x,y}$) of a set temperature ($T^{c}$) within the said electrochemical cell in operation, such that the local temperature values are lower than predetermined maximum local values;
iii) experimental or numerical measurement (130; 230) of a spatial distribution ($D^{r}_{x,y}$) of the effective local flow rate ($D^{r}$) of a heat-exchange fluid circulating in a cooling circuit of a bipolar plate of the said electrochemical cell in operation;
iv) estimation (140; 240) of a spatial distribution ($Q^{e}_{x,y}$) of the local heat flux ($Q^{e}$) produced by the said electrochemical cell in operation, as a function of the said spatial distribution ($T^{c}_{x,y}$) of the set temperature ($T^{c}$) and of the said measured spatial distribution ($D^{r}_{x,y}$) of the effective local flow rate ($D^{r}$), so that the spatial temperature distribution of the said electrochemical cell in operation, the effective local flow rate ($D^{r}$) of which exhibits the said measured spatial distribution ($D^{r}_{x,y}$) and the local heat flux ($Q^{e}$) of which exhibits the said estimated spatial distribution ($Q^{e}_{x,y}$), is substantially equal to that ($T^{c}_{x,y}$) of the set temperature ($T^{c}$);
v) determination (150; 250) of the optimal spatial distribution ($Wc^{f}_{x,y}$) of the catalyst charge (Wc), as a function of the estimated spatial distribution ($Q^{e}_{x,y}$) of the second heat quantity ($Q^{e}$).

**2.** Optimization process according to Claim 1, in which the spatial distribution ($Wc^{f}_{x,y}$) of the catalyst charge (Wc) is determined so that it exhibits a mean value substantially identical to a mean value of the initial distribution ($Wc^{i}_{x,y}$).

**3.** Optimization process according to Claim 1 or 2, in which the bipolar plates are formed of two metal sheets placed side by side, each metal sheet comprising bosses forming, at a so-called external face, a circuit for distribution of a reactive entity, the bosses of the metal sheets together forming, at so-called internal faces opposite the external faces, a cooling circuit comprising cooling channels which are in communication fluidically with one another between an inlet and an outlet of the cooling circuit.

**4.** Optimization process according to any one of Claims 1 to 3, in which the step of determination of the spatial distribution of the catalyst charge (Wc) is additionally carried out as a function of a predetermined value of a parameter representative of an overall electric power of the electrochemical cell.

5. Optimization process according to any one of Claims 1 to 4, in which the step of estimation of a spatial distribution of the local heat flux ($Q^e$) comprises:

- a phase of producing a mesh of a cooling circuit of at least one bipolar plate of the electrochemical cell in which a heat-exchange fluid is intended to flow;
- a phase of numerical simulation by computer of the local heat flux, over the said mesh, by resolution of a discrete numerical model expressing the local heat flux ($Q^e$) as a function of the local temperature and of the effective local flow rate ($D^r$).

6. Optimization process according to any one of Claims 1 to 5, in which step v) comprises:

a) a first substep in which a spatial distribution of the density of an electric signal ($I^e$) produced by the electrochemical cell in operation is estimated, starting from the said estimated spatial distribution of the flux of heat produced ($Q^e$), and
b) a second substep in which the spatial distribution of the parameter of interest (Wc) is determined starting from the said spatial distribution of the density of the electric signal ($I^e$).

7. Process for producing an electrode of an electrochemical cell of a fuel cell, comprising the steps in which:

i) a reference electrochemical cell comprising two electrodes separated from one another by an electrolyte and positioned between two bipolar plates suitable for bringing reactive entities to the electrodes and for discharging heat produced by the electrochemical cell in operation, at least one electrode comprising an active layer suitable for generating an electrochemical reaction from one of the reactive entities, the active layer exhibiting a catalyst charge (Wc) distributed spatially according to an initial distribution ($Wc^i_{x,y}$), is considered;
ii) an optimal spatial distribution ($Wc^f_{x,y}$) of the catalyst charge (Wc) is determined, by the process (100; 200) according to any one of the preceding claims;
iii) the said electrode is produced (160; 260) so that the catalyst charge (Wc) of the active layer exhibits the determined optimal spatial distribution ($Wc^f_{x,y}$).

8. Production process according to Claim 7, in which the stage of producing the said electrode comprises the deposition, in at least one region ($Z_i$) of the active layer identified beforehand from the said determined optimal spatial distribution ($Wf^f_{x,y}$) of the catalyst charge (Wc), of a catalytic ink exhibiting a catalytic charge less than a mean catalytic charge outside the said region ($Z_i$).

9. Production process according to Claim 8, in which the catalytic ink is deposited by screen printing by means of a screen printing screen comprising at least one blocked opening intended to cover the said region ($Z_i$) of the active layer.

10. Process for producing an electrochemical cell of a fuel cell, comprising the following steps:

- a reference electrochemical cell comprising two electrodes separated from one another by an electrolyte and positioned between two bipolar plates suitable for bringing reactive entities to the electrodes and for discharging heat produced by the electrochemical cell in operation, at least one electrode comprising an active layer suitable for generating an electrochemical reaction from one of the reactive entities, the active layer exhibiting a catalyst charge (Wc) distributed spatially according to an initial distribution ($Wc^i_{x,y}$), is considered;
- an optimal spatial distribution ($Wc^f_{x,y}$) of the catalyst charge (Wc) is determined, by the process of determination according to any one of Claims 1 to 6;
- the electrochemical cell is produced on the basis of the reference electrochemical cell in which the catalyst charge (Wc) exhibits the determined optimal spatial distribution ($Wc^f_{x,y}$).

11. Data recording medium, comprising instructions for the implementation of the optimization process according to any one of Claims 1 to 6, these instructions being capable of being carried out by a processor.

**Fig.1a**

**Fig.1b**

$Wc^i_{x,y}$ — 110

$T^c_{x,y}$ — 120

$T^r_{x,y}$ — 130

100

101

$\Delta T^e_{x,y}$ — 140

$Wc^f_{x,y}$ — 150

160

**Fig.2**

**Fig.3**

$$T^c_{i,j+1}$$
$$D^r_{i,j+1}$$
$$Q^e_{i,j+1}$$

$$d^1_{i,j}$$

$$T^c_{i-1,j} \qquad d^2_{i,j} \qquad T^c_{i,j} \qquad d^3_{i,j} \qquad T^c_{i+1,j}$$
$$D^r_{i-1,j} \qquad\qquad D^r_{i,j} \qquad\qquad D^r_{i+1,j}$$
$$Q^e_{i-1,j} \qquad\qquad Q^e_{i,j} \qquad\qquad Q^e_{i+1,j}$$

$$d^4_{i,j}$$

$$T^c_{i,j-1}$$
$$D^r_{i,j-1}$$
$$Q^e_{i,j-1}$$

y

x

**Fig.4**

**Fig.5**

**Fig.6a**

**Fig.6b**

**Fig.7a**

**Fig.7b**

**Fig.7c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2976732
- WO 2007032903 A
- US 2010323279 A
- US 2007298299 A
- US 2010297526 A

**Littérature non-brevet citée dans la description**

- **INOUE et al.** Numerical analysis of relative humidity distribution in polymer electrolyte fuel cell stock including cooling water. *J. Power Sources,* 2006, vol. 162, 81-93